# EUROPEAN PATENT APPLICATION

(11) **EP 1 482 673 A2**
(43) Date of publication of application: **01.12.2004**
(21) Application number: 04253041.0
(22) Date of filing: 24.05.2004
(51) Int. Cl.: H04L 12/24

(54) **Network interface**

(30) Priority: 26.05.2003 JP 2003148138
(71) Applicant: Shinko Electric Industries Co., Ltd., Nagano-shi, Nagano 381-2287 (JP)
(72) Inventor: Kobayashi, Kazuhiro, c/o Shinko Electric, Nagano-shi Nagano 381-2287 (JP)
(74) Representative: Rackham, Stephen Neil

(57) **Abstract**

A network interface (1) comprises: a programmable logic section (11); storage means (12) for storing configuration information including programs for constructing network interface functions; and configuration means (13) for loading desired programs included in the configuration information from the storage means (12) to the programmable logic section (11) so as to construct the network interface functions.

## Description

The present invention relates to a network interface and a method for constructing the same and, in particular, it relates to a network interface that can identify plural types of communication media and selectively implement network interface functions conforming to the connected communication media and to a method for constructing the same.

Network interfaces that can conform to plural types of communication media (Ethernet media) such as 100BASE-T and 10BASE-T have been implemented.

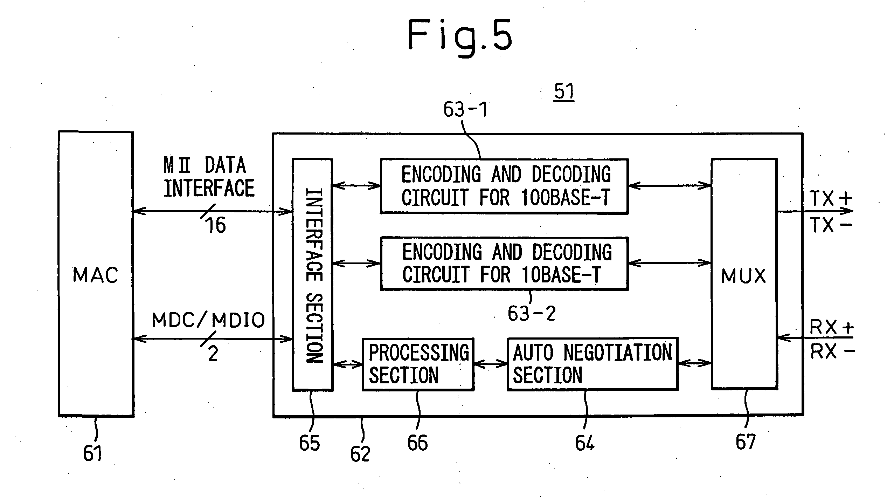

Fig. 5 is a block diagram illustrating an exemplary prior art network interface that can conform to communication media such as 100BASE-T and 10BASE-T.

In a network interface 51 that can conform to the communication media such as 100BASE-T and 10BASE-T, a media access controller (hereinafter referred to as the "MAC") 61 and a PHY device 62 are constituted as respective chips separate from each other. The MAC 61 and the PHY device 62 are electrically interconnected on a printed circuit board via an interface section called a MII (Media Independent Interface). The MII is comprised of a data interface having 16 wires and a MDC/MDIO having 2 wires and, therefore, has 18 wires in total.

The MAC 61 is constituted by, for example, a programmable logic section such as a FPGA (Field Programming Gate Array) or a PLD (Programmable Logic Device).

The PHY device 62 comprises, as its main processing sections, encoding and decoding circuits 63-1 and 63-2 for implementing encoding and decoding functions conforming to 100BASE-T and 10BASE-T, respectively, and an auto negotiation section 64 for automatically identifying and detecting specifications of the communication media connected to the network interface 51.

As IEEE 802.3 standard specifies encoding methods for each communication media such as 100BASE-T and 10BASE-T, in order to implement a network interface that can be connected to plural types of communication media such as 100BASE-T and 10BASE-T, encoding and decoding circuits for implementing encoding methods conforming to each of the communication media must be provided separately. The auto negotiation section 64 identifies specifications of the communication media connected to the network interface 51 so as to select an encoding and decoding circuit that can implement an encoding method conforming to the communication media connected to the network interface 51.

In this connection, in addition to the encoding and decoding circuits 63-1 and 63-2 and the auto negotiation section 64 described above, the PHY device 62 comprises, for example, an interface section 65, a processing section 66 having clock generation, register and other functions, and a MUX 67.

When the communication media are connected to the network interface 51, the auto negotiation section 64 detects the specifications of the connected communication media. In the prior art example shown in Fig. 5, the auto negotiation section 64 detects whether the connected communication media are 100BASE-T or 10BASE-T. One of the encoding and decoding circuits 63-1 and 63-2 that conforms to the detected communication media is selected and performed.

In the network interface of the prior art example described above, the PHY device includes two encoding and decoding circuits. After the auto negotiation section identifies the communication media and selects the encoding and decoding circuit conforming to the communication media, the encoding and decoding circuit that is not selected is not used at all and, as a result, becomes completely redundant. It means that even the encoding and decoding circuit that does not work at all is also provided with semiconductor resources, which is not cost-effective and significantly affects downsizing of the chip constituting the PHY device and, thus, the entire network interface device. Further, electric power is continuously supplied to the encoding and decoding circuit that does not work at all, which results in wasteful consumption of electric power.

In particular, in view of the fact that IEEE 802.3 standard specifies encoding methods for each of communication media, as the number of types of communication media to which the network interface can conform is increased, the convenience in using the network interface is also increased but, oh the other hand, there is a drawback in that the waste of the semiconductor resources, cost and electric power is also increased.

Further, in the network interface according to the prior art example, as the MII that connects between the MAC and the PHY device, which are constituted as the respective chips separate from each other, has a plurality of wires, a large area is inevitably required to mount the MII on the printed circuit board, which significantly affects the downsizing of the entire network interface device.

Thus, in view of the above problems, it is an object of the present invention to provide a network interface optimized for connected communication media and a method for constructing the same.

In order to achieve the above object, in the present invention, a network interface comprises a programmable logic section and storage means for storing configuration information that includes programs for constructing network interface functions. Then, under such configuration, an optimal network interface is implemented by detecting specifications of communication media connected to the network interface and, based on the detected specifications of the communication media, selecting programs for constructing encoding and decoding functions conforming to at least the detected communication media from all of the programs included in the configuration information and loading the selected programs into the programmable logic section so as to construct the encoding and decoding functions.

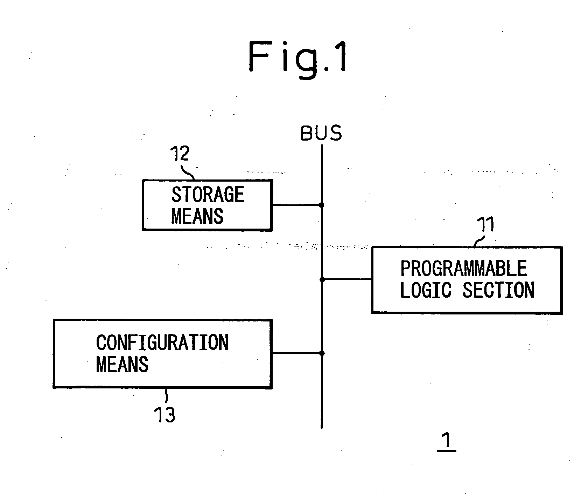

Fig. 1 is a schematic diagram of a network interface according to the present invention.

A network interface 1 according to the present invention comprises: a programmable logic section 11; storage means 12 for storing configuration information that includes programs for constructing network interface functions; and configuration means 13 for loading the desired program included in the configuration information from the storage means 12 into the programmable logic section 11 so as to construct the network interface functions.

As the programs for constructing the network interface functions, the configuration information comprises at least: programs for constructing auto negotiation functions to detect specifications of communication media connected to the network interface; and programs for constructing encoding and decoding functions.

Further, it is preferred that the configuration information further comprises programs for constructing a media access controller.

Based on the specifications of the communication media that are detected by using the auto negotiation functions constructed in the programmable logic section, the configuration means selects configuration information including at least the programs for constructing the encoding and decoding functions conforming to the detected communication media and loads the selected configuration information from the storage means into the programmable logic sections so as to construct the encoding and decoding functions.

According to the present invention, a network interface optimized for connected communication media and a method for constructing the same can be implemented.

### BRIEF DESCRIPTION OF THE DRAWINGS

The present invention will be more clearly understood from the description as set below with reference to the accompanying drawings, wherein:
Fig. 1 is a schematic diagram of a network interface according to the present invention;
Fig. 2 is a block diagram of the network interface according to an embodiment of the present invention;
Fig. 3 is a flow chart showing an operational flow at the time of a reset process in a method for constructing the network interface according to an embodiment of the present invention;
Fig. 4 is a flow chart showing an operational flow at the time of changing communication media in the method for constructing the network interface according to an embodiment of the present invention; and
Fig. 5 is a block diagram illustrating an exemplary prior art network interface that can conform to communication media such as 100BASE-T and 10BASE-T.

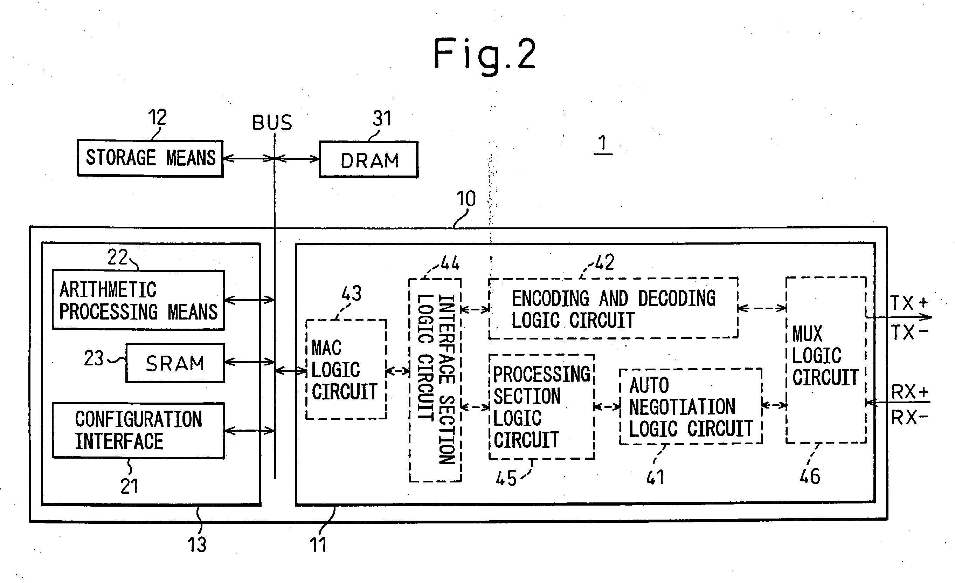

Fig. 2 is a block diagram of a network interface according to an embodiment of the present invention.

A network interface 1 according to an embodiment of the present invention comprises: a programmable logic section 11; storage means 12 for storing configuration information that includes programs for constructing network interface functions; and configuration means 13 for loading desired programs included in the configuration information from the storage means into the programmable logic section 11 so as to construct the network interface functions.

The network interface 1 in this embodiment comprises a PLD that is designated by reference numeral 10 in Fig. 2. Here, it is to be noted that the PLD may be substituted by a FPGA.

The PLD 10 comprises the programmable logic section 11 and the configuration means 13.

In this embodiment, the configuration means 13 comprises: a configuration interface 21 for interfacing between the storage means 12 and the programmable logic section 11; arithmetic processing means 22 for controlling the configuration interface 21; and a SRAM 23, and these elements are integrated as a hardware macrocell on the PLD 10.

The storage means 12 and a DRAM 31 are connected to the PLD 10.

The storage means 12 is comprised of a flash memory and the like and stores the configuration information including the programs for constructing the network interface functions.

The configuration information in this embodiment comprises: programs for constructing auto negotiation functions to detect specifications of communication media connected to the network interface; programs for constructing encoding and decoding functions; and programs for constructing a media access controller.

In view of the fact that IEEE 802.3 standard specifies encoding methods for each of the communication media, in this embodiment, several programs to construct logic for the encoding methods for each of the communication media specified by IEEE 802.3 standard, such as Manchester encoding for 10BASE-T, 8B6T encoding for 100BASE-T, and 4D-PAM5 (8B1Q4) encoding for 1000BASE-T, are prepared and stored in the storage means 12.

Further, in this embodiment, in addition to the programs set forth above, programs for constructing logic corresponding to the interface section, the processing section having clock generation, register and other functions, and the MUX, each of which is described in the prior art example of Fig. 5, are further provided.

Thus, as described in detail later, when the programs for constructing the logic described above are loaded into the programmable logic section 11, an auto negotiation logic circuit 41, an encoding and decoding logic circuit 42, a MAC logic circuit 43, an interface section logic circuit 44, a processing section logic circuit 45 having clock generation, register and other functions, and a MUX logic circuit 46 are constructed. Here, the MUX 46 may be compatible with optical communications.

Further, in this embodiment, in addition to the configuration information described above, a processing program for allowing the arithmetic processing means to control the configuration interface is also stored in the storage means 12. Alternatively, a look-up table between the communication media and the encoding methods may be stored in the storage means 12 and the programs for constructing the encoding and decoding functions themselves may be stored in a storage device separate from the storage means 12.

In this embodiment, the PLD 10, the storage means 12 comprised of the flash memory, and the DRAM 31 are mounted on a printed circuit board and wired to each other. As an alternative, the network interface may be implemented in the form of System-on-Silicon, in which all of the PLD 10, the storage means 12 and the DRAM 31 are mounted on a silicon substrate, or in the form of system-in-package, in which all of the PLD 10, the storage means 12 and the DRAM 31 are mounted in one package.

Further, in this embodiment, the arithmetic processing means 22 for performing the process to load the programs for each logic is constituted by a CPU to execute application programs and the like. As an alternative, the arithmetic processing means 22 may be constituted by a CPU that is different from that for executing the application programs and the like and that is dedicated for controlling the loading of the programs, or it may be constituted by hardware such as a state machine dedicated for controlling the loading of the programs in the logical block.

Next, an operational flow of a method for constructing the network interface according to an embodiment of the present invention will be described.

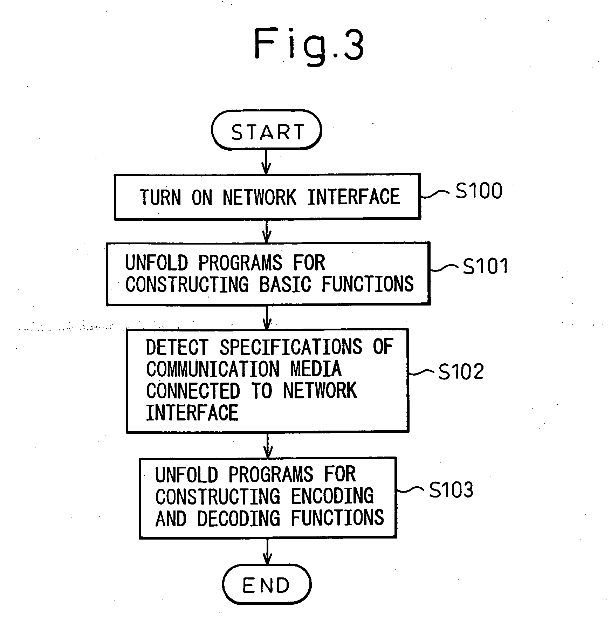

Fig. 3 is a flow chart showing an operational flow at the time of reset process in the method for constructing the network interface according to the embodiment of the present invention.

First, in step S100, the network interface is turned on.

When the network interface is turned on, the arithmetic processing means 22 in Fig. 2 senses that the network interface is turned on and, then, in step S101, controls the configuration interface 21 to load the configuration information including the programs for constructing the network interface functions from the storage means 12 into the programmable logic section 11.

In step S101 in this embodiment, the programs for constructing particular basic functions among the network interface functions are loaded. More specifically, the programs for constructing the auto negotiation functions to detect the specifications of the communication media connected to the network interface, the programs for constructing the MAC, and the programs for constructing the logic conforming to each block of the interface section, the processing section having the clock generation, the register and other functions and the MUX described in the prior art example of Fig. 5 above are loaded from the storage means 12 into the programmable logic section 11. As a result, as shown in Fig. 2, the auto negotiation logic circuit 41, the MAC logic circuit 43, the interface section logic circuit 44, the a processing section logic circuit 45 having clock generation, register and other functions, and the MUX logic circuit 46 are constructed on the programmable logic section 11. It allows each of the logic circuits set forth above to perform respective processes.

In step S102, the auto negotiation logic circuit 41 constructed on the programmable logic section 11 performs the process for automatically detecting the specifications of the communication media connected to the network interface 1. The arithmetic processing means 22 is notified of the detection result via the register in the processing section logic circuit 45, the interface section logic circuit 44 and the MAC logic circuit 43.

Then, in step S103, based on the specifications of the communication media of which it is notified by the auto negotiation logic circuit 41, the arithmetic processing means 22 selects programs for constructing the encoding and decoding functions conforming to the communication media from all of the programs included in the configuration information stored in the storage means and loads the selected programs into the programmable logic section 11 so as to construct the encoding and decoding logic circuit 42. Here, while the communication media are not connected to the network interface 1 even though the network interface 1 is turned on, the auto negotiation logic circuit 41 notifies the arithmetic processing means 22 of an empty detection result so that the arithmetic processing means 22 may be waiting in the meantime.

Thus, the reset process after the turn-on of the network interface according to this embodiment is completed as described above. It allows the encoding method conforming to the communication media that are connected to the network interface after the turn-on to be implemented on the network interface.

Next, an operational flow, when the communication media connected to the network interface are changed after the reset process is completed, will be described.

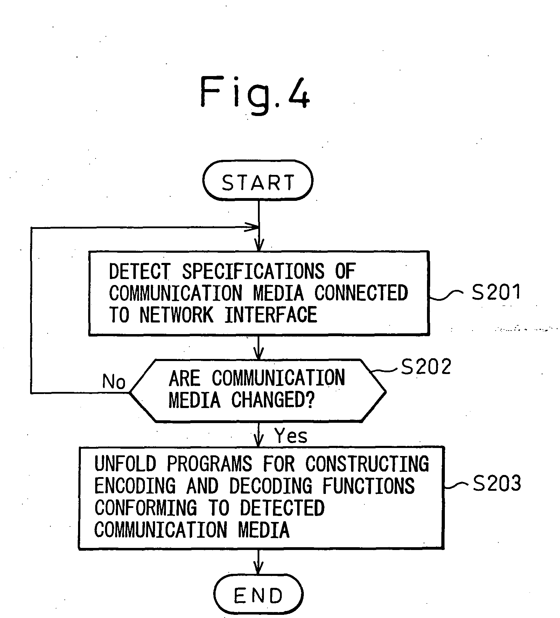

Fig. 4 is a flow chart showing the operational flow at the time of changing communication media in the method for constructing the network interface according to an embodiment of the present invention.

Even after completing the reset process described with reference to Fig. 3, the auto negotiation logic circuit 41 constructed on the programmable logic section 11 of Fig. 2 performs the process for automatically detecting the specifications of the communication media connected to the network interface 1 (step S201). The arithmetic processing means 22 is always notified of the detection result via the register in the processing section logic circuit 45, the interface section logic circuit 44 and the MAC logic circuit 43.

In step S202, the arithmetic processing means 22 monitors the specifications of the communication media of which it is notified by the auto negotiation logic circuit 41 and determines whether the communication media connected to the network interface 1 have changed or not. If it is determined that the communication media are not changed, the arithmetic processing means 22 continues the monitoring as it is but, if it determined that the communication media are changed, the process proceeds to step S203.

In step S203, based on the specifications of the communication media of which it is notified, the arithmetic processing means 22 selects programs for constructing the encoding and decoding functions conforming to the communication media from all of the programs included in the configuration information stored in the storage means and loads the selected programs into the programmable logic section 11. This allows the encoding method conforming to the changed communication media to be implemented on the network interface.

Thus, in this embodiment, when the communication media connected to the network interface 1 is changed, the encoding and decoding logic circuit 42 on the programmable logic section 11 is rewritten by loading the programs for constructing the encoding and decoding functions conforming to the communication media into the programmable logic section 11 but, as an alternative, all the logic circuits 41 - 46 that are already constructed on the programmable logic section 11 may be rewritten or several logic circuits including at least the encoding and decoding logic circuit 42 may be rewritten.

As described above, according to the present invention, the network interface optimized for the connected communication media and the method for constructing the same can be implemented.

In the network interface according to the present invention, because an encoding and decoding circuit conforming to communication media connected to the network interface at present is implemented on a programmable logic section in a PLD or FPGA and, therefore, the possibility that plural types of encoding and decoding circuits are implemented at the same time on one device is eliminated in contrast to the prior art example, this network interface can utilize semiconductor resources efficiently and is more advantageous in terms of cost in comparison with the prior art example. The efficient use of the semiconductor resources greatly contributes to cost reduction, downsizing and multifunctionality of the device. Further, it is also effective for reducing the total electric power consumption of the network interface.

Further, in the network interface according to the present invention, as MAC and PHY devices are software-implemented on one chip, it is not necessary to mount a MII having a plurality of wires on a printed circuit board. Therefore, the printed circuit board can be utilized efficiently, which greatly contributes to downsizing of the entire network interface device.

## Claims

1. A network interface comprising:
a programmable logic section;
storage means for storing configuration information that includes programs for constructing network interface functions; and
configuration means for loading desired ones of said programs included in said configuration information from said storage means into said programmable logic section so as to construct said network interface functions.

2. A network interface according to claim 1,
wherein said configuration information comprises at least: programs for constructing auto negotiation functions to detect specifications of communication media connected to said network interface; and programs for constructing encoding and decoding functions.

3. A network interface according to claim 1 or 2,
wherein said configuration information comprises programs for constructing a media access controller.

4. A network interface according to claim 2 or 3,
wherein, based on the specifications of the communication media that are detected by using said auto negotiation functions constructed in said programmable logic section, said configuration means selects said configuration information including at least the programs for constructing said encoding and decoding functions conforming to said communication media and loading the selected programs into said programmable logic section so as to construct said encoding and decoding functions.

5. A network interface according to any one of claims 2 - 4, further comprising sensing means for sensing that said network interface is turned on,
wherein, when said sensing means senses that said network interface is turned on, said configuration means loads said configuration information including at least the programs for constructing said auto negotiation functions from said storage means into said programmable logic section so as to construct said auto negotiation functions.

6. A network interface according to claim 3 or 4, further comprising sensing means for sensing that said network interface is turned on,
wherein, when said sensing means senses that said network interface is turned on, said configuration means loads said configuration information including at least the programs for constructing said media access controller from said storage means into said programmable logic section so as to construct said media access controller.

7. A network interface according to any one of claims 1 - 6, wherein said configuration means comprises:
a configuration interface for interfacing between said storage means and said programmable logic section; and
arithmetic processing means for controlling said configuration interface.

8. A method for constructing a network interface that comprises: a programmable logic section; and storage means for storing configuration information including programs for constructing network interface functions, the method comprising:
the detecting step of detecting specifications of communication media connected to said network interface; and
the loading step for, based on the specifications of the communication media detected in said detecting step, selecting programs for constructing encoding and decoding functions conforming to at least the detected communication media from all of said programs included in said configuration information and loading the selected programs into said programmable logic section so as to construct said encoding and decoding functions.

9. A method for constructing a network interface according to claim 8, further comprising:
the sensing step of sensing that said network interface is turned on; and
the second loading step for, when it is sensed that said network interface is turned on, loading programs for constructing auto negotiation functions to perform said detecting step of detecting the specifications of the communication media connected to said network interface from all of said programs included in said configuration information stored in said storage means into said programmable logic section so as to construct said auto negotiation functions.

10. A method for constructing a network interface according to claim 8 or 9, further comprising the third loading step of loading programs for constructing a media access controller from all of said programs included in said configuration information stored in said storage means into said programmable logic section so as to construct said media access controller.

11. A method for constructing a network interface, comprising:
the first step of sensing that said network interface is turned on; and
the second step of, when it is sensed that said network interface is turned on, loading desired ones of programs for constructing network interface functions included in configuration information from storage means for storing the configuration information including said programs into a programmable logic section so as to construct said network interface functions.

12. A method for constructing a network interface according to claim 11, wherein said configuration information comprises at least programs for constructing auto negotiation functions to detect specifications of communication media connected to said network interface.

13. A method for constructing a network interface according to claim 12, further comprising:
the third step of detecting the specifications of the communication media connected to said network interface by using said auto negotiation functions constructed in said programmable logic section; and
the fourth step for, based on the specifications of the communication media detected in said third step, selecting programs for constructing said encoding and decoding functions conforming to said communication media from all of said programs included in said configuration information stored in said storage means and loading the selected programs into said programmable logic section so as to construct encoding and decoding functions.

14. A method for constructing a network interface according to any one of claims 11 - 13, further comprising the fifth step of loading programs for constructing a media access controller from all of said programs included in said configuration information stored in said storage means into said programmable logic section so as to construct said media access controller.
